# EUROPÄISCHE PATENTSCHRIFT

(11) **EP 0 358 962 B1**
(45) Veröffentlichungstag und Bekanntmachung des Hinweises auf die Patenterteilung: **11.05.1994**
(21) Anmeldenummer: 89115046.8
(22) Anmeldetag: 16.08.1989
(51) Int. Cl.: B01D 53/26, B01D 53/04

(54) **Adsorbtionstrockner**
Adsorption dryer
Sécheur à adsorption

(30) Priorität: 31.08.1988 DE 8810997 U
(43) Veröffentlichungstag der Anmeldung: 21.03.1990
(73) Patentinhaber: Stanelle, Karl-Heinz, D-74363 Güglingen (DE)
(72) Erfinder: Stanelle, Karl-Heinz, D-74363 Güglingen (DE)
(74) Vertreter: Müller, Hans, Dipl.-Ing.

(56) Entgegenhaltungen:
- EP-A- 0 010 704
- DE-A- 3 605 365
- FR-A- 2 270 929
- GB-A- 2 136 602
- US-A- 4 549 888
- US-A- 4 685 941

## Beschreibung

Die Erfindung betrifft einen Adsorbtionstrockner zum Bereitstellen von trockener Nutzluft für Verbraucher wie den Entstaubungsfilter eines Silos. Im Betrieb sind diese Trockner über eine Leitung sowohl mit einer Druckluft-Versorgungsquelle als auch mit dem entsprechenden Verbraucher verbunden.

Bei vielen technischen Verbrauchern von Luft muß dieselbe trocken bereitgestellt werden. Feuchtigkeit enthaltende Luft würde einen Verbraucher wie z. B. den Entstaubungsfilter eines Silos unbrauchbar machen, da die Feuchtigkeit sich mit den am Filter absetzenden Staubpartikeln verbinden und die Filteröffnungen zu-"backen" würde.

Adsorbtionstrockner der eingangs genannten Art sind bekannt. Bekannt sind damit auch solche Adsorbtionstrockner, die während ihrer Adsorbtionsphase gleichzeitig wieder regeneriert werden. Leistungsmäßig werden diese Trockner nach der maximal pro Zeiteinheit benötigten trockenen Luft ausgelegt. Auch bei zeitlich nicht kontinuierlich benötigter trockener Luft wird die Zuleitung zum Adsorber regelmäßig nicht mit einer Absperreinrichtung versehen, da die trockene Luft in aller Regel schlagartig benötigt wird und ein zeitlich vorhergehendes Aufmachen der Zuleitung nicht abgewartet werden kann.

Ausgehend von diesem vorbekannten Stand der Technik liegt der Erfindung die Aufgabe zugrunde, einen Adsorbtionstrockner der eingangs genannten Art anzugeben, mit dem trockene Luft für Verbraucher, die dieselbe nur stoßweise benötigen, auf wirtschaftlich optimale Weise bereitgestellt werden kann.

Diese Erfindung ist durch die Merkmale des Hauptanspruchs gegeben. Sie zeichnet sich bei dem eingangs genannten Adsorbtionstrockner mit den Merkmalen a) und b) dementsprechend durch die Merkmale c) bis k) aus.

Ein derartiger Adsorbtionstrockner hat mehrere Vorteile. So kann durch die Anordnung des Speichers der Trockner für den durchschnittlichen Luftverbrauchs ausgelegt werden. Die Anordnung des Schaltgliedes in der Zuleitung zum Adsorber erhöht weiter den wirtschaftlichen Nutzungsgrad des Absorbers, da in den Zeiträumen, wo beine trockene Luft benötigt wird, der Adsorber stillgelegt und damit das Auftreten von Verlust-Luft, die zum Trocknen des Adsorbers selber benötigt wird, vermieden werden kann. Außerdem wird durch das pneumatische Betätigen dieses Schaltgliedes mit der im Speicher vorrätig gehaltenen Luft erreicht, daß alle diese Vorteile gleichsam vollautomatisch, ohne Einwirken von Bedienpersonal und ohne eine elektrische bzw. elektronische Steuerungseinrichtung erreicht werden können.

Aus der US-A-4,549,888 ist ein bei einer Luftdruckbremse verwendeter Adsorbtionstrockner bekannt. Dieser Adsorbtionstrockner weist die Merkmale c) bis g) des Anspruchs 1 auf. Die Merkmale h) bis k) weist er nicht auf; so kann in der OFFEN-Stellung der zum Trockner führenden Zuleitung der Trockner zwar mit trockener Druckluft beaufschlagt nicht aber gleichzeitig auch regeneriert werden. Das Regenerieren findet nämlich immer dann statt, wenn der Adsorber nicht mit Druckluft beaufschlagt wird. Daher ist dieser Trockner nicht zum Betrieb von Verbrauchern eines Silos geeignet.

Dieses trifft auch für den aus der DE-A-36 05 365 bekannten Adsorbtionstrockner zu. Dieser Trockner weist das Merkmal auf, daß die zum Regenerieren benötigte Luft aus dem Speicher genommen wird. Das Regenerieren findet bei diesem Adsorbtionstrockner damit ebenfalls, wie bei dem aus der US-A-4,549,888 bekannten Trockner, immer nur dann statt, wenn der Speicher nicht mit Druckluft gefüllt wird. Darüberhinaus sind bei diesem Trockner längere Stillstandszeiten bzw. Ruhepausen nicht möglich, denn entweder wird der Druckluftspeicher durch den Adsorbtionstrockner mit trockener Luft beaufschlagt und damit der Behälter aufgefüllt oder es wird getrocknete Luft aus dem Behälter abgezogen und zum Regenerieren des Trockners verwendet. Es wird daher auch in Ruhepausen Trocknungsluft verbraucht. Auch dieser Trockner eignet sich daher nicht für einen Verbraucher wie den Entstaubungsfilter eines Silos.

Weitere Ausgestaltungen und Vorteile der Erfindung sind den in den Ansprüchen weiterhin aufgeführten Merkmalen zu entnehmen.

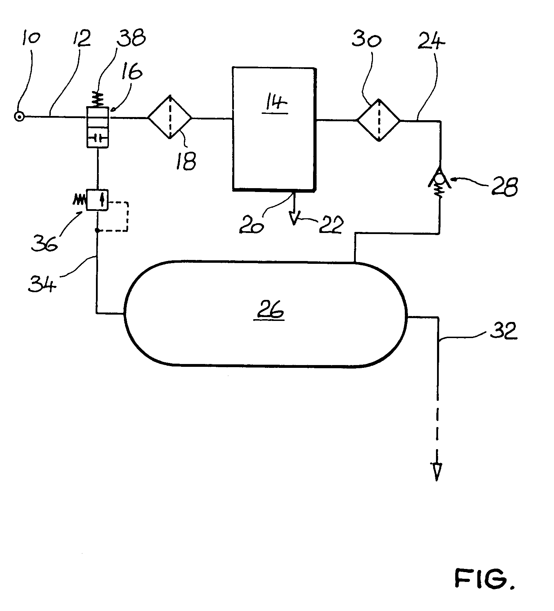

Die Erfindung wird im folgenden anhand des in der Zeichnung dargestellten Ausführungsbeispiels näher beschrieben und erläutert. Die einzige Figur zeigt das Blockschaltbild für einen Adsorbtionstrockner nach der Erfindung.

Von einer Druckluft-Versorgungsquelle 10, die beispielsweise ein Kompressor sein kann, führt eine Leitung 12 zu einem Adsorbtionstrockner 14. In diesem Adsorbtionstrockner 14 befinden sich nicht näher dargestellte Trocknungseinrichtungen, durch die die zu trocknende Luft hindurchgeführt wird, wobei die in der Luft befindliche Feuchtigkeit zurückgehalten wird. Zum Trocknen dieser Trocknungseinrichtungen wird bereits getrocknete Luft verwendet, so daß insgesamt beim Betrieb des Adsorbertrockners 14 ein gewisser Anteil von Luft, der in der Größenordnung von 14 % zu veranschlagen ist, als Verlust anfällt.

In der Leitung 12 befindet sich ein Zwei-Wege-Ventil 16, mit der der Querschnitt der Leitung 12 freigegeben - wie in der Figur dargestellt - oder versperrt werden kann, und ferner ein Filter 18 zum Abscheiden von Verunreinigungen in der durch die Leitung 12 strömenden, Feuchtigkeit enthaltenden Luft.

Der Adsorbtionstrockner 14 besitzt einen Auslaß 20, durch den hindurch die beim Betrieb des Trockners 14 anfallende feuchte Verlust-Luft 22 ins Freie abgelassen wird.

Von dem Adsorber 14 führt eine weitere Leitung 24 zu einem Druckluft-Speicher 26. In dieser Leitung 24 befindet sich ein Rückschlagventil 28, das so in der Leitung 24 eingebaut ist, daß die Luft nur in Richtung Speicher 26, aber nicht wieder zurück zu dem Trockner 14 strömen kann.

In der Leitung 24 befindet sich ferner noch ein Feinfilter 30, der zum zusätzlichen Reinigen der getrockneten Luft Verwendung findet.

Vom Druckluft-Speicher 26 führt eine Leitung 32 zum jeweiligen Verbraucher, der mit trockener Luft versorgt werden soll, und eine weitere Leitung 34 zurück zum Zwei-Wege-Ventil 16.

In der Leitung 34 ist ein Druckbegrenzungsventil 36 eingebaut, das bei einem bestimmten Überdruck im Speicher 26 die Leitungsverbindung zum Zwei-Wege-Ventil 16 freigibt. Die durch die Leitung 34 strömende Luft wird zum Verstellen des Zwei-Wege-Ventils 16 verwendet, und zwar verstellt die aus dem Speicher 26 durch die Leitung 34 strömende Luft das Zwei-Wege-Ventil 16 in seine ZU-Stellung. Bei Unterschreiten des in dem Speicher 26 vorbestimmten Überdruckwertes verschließt das Druckbegrenzungsventil die Leitung 34 mit der Folge, daß das Zwei-Wege-Venti 16 in seine in der Zeichnung dargestellte OFFEN-Stellung sich zurückverstellt.

Der in der Zeichnung dargestellte Adsorbtionstrockner funktioniert auf folgende Weise. Von der Druckluft-Versorgungsquelle wird beispielsweise Druckluft von 6 bar kontinuierlich bereitgstellt. Durch das offene Zwei-Wege-Ventil 16 hindurch strömt diese Luft zum Adsorber 14, wird dort getrocknet und strömt dann weiter in den Speicher 26 hinein. Sofern vom Verbraucher keine trockene Luft benötigt wird, baut sich in dem Speicher 26 ein Überdruck auf. Bei beispielsweise 6 bar oder weniger, je nach Einstellung, öffnet das Druckbegrenzungsventil 36 und verstellt dadurch das Zwei-Wege-Ventil 16 in seine ZU-Stellung. Es steht nun eine bestimmte Menge an Druckluft zum Versorgen eines Verbrauchers durch die Leitung 32 hindurch zur Verfügung. Nach Abzug einer bestimmten Menge Druckluft aus dem Speicher 26 durch die Leitung 32 hindurch baut sich der Druck im Speicher 26 ab mit der Folge, daß bei einem bestimmten Druckwert unterhalb von 6 bar durch das Druckbegrenzungsventil 36 die Leitung 34 wieder verschlossen wird. Dadurch verstellt sich das Zwei-Wege-Ventil 16 wieder in seine in der Zeichnung dargestellte OFFEN-Stellung. Das Verstellen des Zwei-WegeVentils 16 erfolgt bei dem in der Zeichnung dargestellten Beispielsfall durch die Kraft der Ventilfeder 38. Das Ventil 16 bleibt dann solange offen, bis sich im Speicher 26 wieder ein Überdruck von vorbestimmter Größe eingestellt hat.

## Patentansprüche

1. Adsorbtionstrockner zum Bereitstellen von trockener Nutzluft für Entstaubungsfilter und andere Verbraucher eines Silos, mit
a) einer Leitung (12) zu einer Druckluft-Versorgungsquelle (10),
b) einer Leitung (24, 32) zu dem Verbraucher,
**gekennzeichnet durch**
c) einen in der Leitung zu dem Verbraucher vorhandenen Druckluftspeicher (26),
d) ein Rückschlagventil (28) in der Leitungsverbindung (24) zwischen dem Adsorber (14) und dem Speicher (26), das so eingebaut ist, daß es einen offenen Leitungsquerschnitt in Richtung Speicher (26), dagegen einen geschlossenen Querschnitt in Richtung Adsorber (14) aufweist,
e) eine Leitungsverbindung (34) zwischen dem Speicher (26) und einem Schaltglied (16),
f) ein Druckbegrenzungsventil (36) in dieser Leitungsverbindung (34),
g) wobei das Schaltglied (16) mittels Druckluft durch die Verbindungsleitung (34) zwischen dem Speicher (26) und dem Schaltglied (16) hindurch von seiner OFFEN- in seine ZU-Stellung umschaltbar ist und wobei in der OFFEN-Stellung der Adsorber (14) mit zu trocknender Druckluft beaufschlagbar ist,
h) wobei in der OFFEN-Stellung des pneumatisch betätigbaren Schaltgliedes (16) der Adsorber (14) auch regeneriert wird,
i) wobei durch das Schaltglied (16) die Leitung (12) zwischen der Druckluft-Versorgungsquelle (10) und dem Adsorber (14) verschließbar ist,
k) wobei das Druckbegrenzungsventil (36) beim Überschreiten eines vorgegebenen Luftdruckes in dem Speicher (26) das Schaltglied (16) in seiner ZU-Stellung hält, so daß der Adsorber weder mit Druckluft versorgbar noch selber regenerierbar ist.

2. Adsorbtionstrockner nach Anspruch 1,
**dadurch gekennzeichnet,** daß
in der Leitung (12) von der Druckluft-Versorgungsquelle (10) zum Adsorber (14) ein Filter (18) vorhanden ist.

3. Adsorbtionstrockner nach Anspruch 1
**dadurch gekennzeichnet,** daß
in der Leitung (24) vom Adsorber (14) zum Speicher (26) ein Filter (30) vorhanden ist.

## Claims

1. Adsorption dryer for preparing dry useful air for dust extraction filters and other consumers of a silo, comprising:
a) a pipe (12) to a compressed air supply source (10),
b) a pipe (24, 32) to the consumer, characterized by
c) a compressed air reservoir (26) provided in the pipe to the consumer,
d) a non-return valve (28) provided in the pipe connection (24) between the adsorber (14) and the reservoir (26) and installed in such a manner that it has an open pipe cross-section in the direction of the reservoir (26) but a closed cross-section in the direction of the adsorber (14),
e) a pipe connection (34) between the reservoir (26) and a control device (16),
f) a pressure control valve (36) in said pipe connection (34),
g) wherein the control device (16) can be switched over, by means of compressed air through the connecting pipe (34) between the reservoir (26) and the control device (16) from its OPEN position to its CLOSED position, and wherein in the OPEN position the adsorber (14) can be fed with compressed air to be dried,
h) wherein in the OPEN position of the pneumatically actuatable control device (16) the adsorber (14) is also regenerated,
i) wherein the pipe (12) between the compressed air supply source (10) and the adsorber (14) can be closed by the control device (16),
k) wherein the pressure control valve (36) holds the control device (16) in its CLOSED position when a predetermined air pressure is exceeded in the reservoir (26), so that the adsorber can neither be supplied with compressed air nor itself be regenerated.

2. Adsorption dryer according to Claim 1, characterized in that a filter (18) is provided in the pipe (12) from the compressed air supply source (10) to the adsorber (14).

3. Adsorption dryer according to Claim 1, characterized in that a filter (30) is provided in the pipe (24) from the adsorber (14) to the reservoir (26).

## Revendications

1. Sécheur à adsorption destiné à mettre de l'air sec utilisable à la disposition de filtres de dépoussiérage et d'autres postes d'utilisation d'un silo, comprenant :
a) une conduite (12) allant à une source d'alimentation en air comprimé (10),
b) une conduite (24, 32) allant au poste d'utilisation,
caractérisé par :
c) un accumulateur d'air comprimé (26) présent dans la conduite allant au poste d'utilisation,
d) une soupape anti-retour (28) qui est montée dans la conduite de liaison (24) située entre l'adsorbeur (14) et l'accumulateur (26) d'une manière telle qu'elle présente une section transversale ouverte dans la direction de l'accumulateur (26), mais en revanche une section transversale fermée dans la direction de l'adsorbeur (14),
e) une conduite de liaison (34) située entre l'accumulateur (26) et un organe de commutation (16),
f) une soupape de limitation de la pression (36) dans cette conduite de liaison (34),
g) l'organe de commutation (16) pouvant passer de sa position ouverte à sa position fermée au moyen d'air comprimé passant à travers la conduite de liaison (34) qui est située entre l'accumulateur (26) et l'organe de commutation (16), et l'adsorbeur (14) pouvant être alimenté en air comprimé à sécher dans sa position ouverte,
h) l'adsorbeur (14) étant également régénéré dans la position ouverte de l'organe de commutation (16) à actionnement pneumatique,
i) la conduite (12) située entre la source d'alimentation en air comprimé (10) et l'adsorbeur (14) pouvant être fermée par l'organe de commutation (16),
j) la soupape de limitation de la pression (36) maintenant l'organe de commutation (16) dans sa position fermée lorsqu'une pression d'air déterminée est dépassée vers le haut dans l'accumulateur (26), de sorte que l'adsorbeur ne peut pas être alimenté en air comprimé, ni régénéré lui-même.

2. Sécheur à adsorption selon la revendication 1, caractérisé par le fait qu'un filtre (18) est présent dans la conduite (12) allant de la source d'alimentation en air comprimé (10) à l'adsorbeur (14).

3. Sécheur à adsorption selon la revendication 1, caractérisé par le fait qu'un filtre (30) est présent dans la conduite (24) allant de l'adsorbeur (14) à l'accumulateur (26).
